# EUROPEAN PATENT APPLICATION

(11) **EP 4 799 894 A1**
(43) Date of publication of application: **02.09.2026**
(21) Application number: 25206323.5
(22) Date of filing: 02.10.2025
(51) Int. Cl.: B60W 50/14

(54) **VEHICLE AND METHOD FOR CONTROLLING THE SAME**

(30) Priority: 06.12.2024 KR 20240180460
(71) Applicant: Hyundai Motor Company, Seoul 06797 (KR); Kia Corporation, Seoul 06797 (KR)
(72) Inventor: PARK, Se Young, 18280 Hwaseong-si, Gyeonggi-do (KR); KIM, Su Hyun, 18280 Hwaseong-si, Gyeonggi-do (KR); LEE, Byoung Joon, 18280 Hwaseong-si, Gyeonggi-do (KR); CHOI, Eun Young, 18280 Hwaseong-si, Gyeonggi-do (KR)
(74) Representative: Viering, Jentschura & Partner mbB Patent- und Rechtsanwälte

(57) **Abstract**

An apparatus of a vehicle may comprise a processor and a memory storing at least one instruction that, when executed by the processor communicating with the memory, is configured to cause the apparatus to release vehicle control associated with a first autonomous driving mode stored in the memory, output, via a user interface of the vehicle, a prompt for a user input, based on the release, generate, based on the user input received via the user interface in response to the prompt, a signal indicating activation of vehicle control associated with a second autonomous driving mode stored in the memory, and control, based on the signal and the activation of vehicle control associated with the second autonomous driving mode, autonomous driving of the vehicle.

## Description

### CROSS-REFERENCE TO RELATED APPLICATION

This application claims the benefit of priority to Korean Patent Application No. 10-2024-0180460, filed in the Korean Intellectual Property Office on December 6, 2024, the disclosure of which is incorporated herein by reference in its entirety.

### TECHNICAL FIELD

Various examples of the present disclosure relate to a vehicle driving system that replaces or assists with the control of a vehicle driver.

### BACKGROUND

The matters described in this Background section are only for enhancement of understanding of the background of the disclosure, and should not be taken as acknowledgment that they correspond to prior art already known to those skilled in the art.

Various systems that support vehicle driving control for autonomous driving are being introduced. These systems contribute to improving driving safety and convenience, and are designed to autonomously perform vehicle control under a specific condition.

However, when a specific autonomous driving function is deactivated, there may be an inconvenience in that the driver may have to perform a complex manipulation to activate a necessary control function again.

For example, when the autonomous driving system is deactivated during driving, the driver may have to set or activate the system through several steps again, which may cause problems in which a driver's attention is diverted and safety is affected.

### SUMMARY OF THE DISCLOSURE

The present disclosure has been made to solve the aforementioned problems, and is directed to quickly activating a second autonomous driving system according to a specific condition to resume a function operated by an existing system even after a first autonomous driving system is deactivated.

The problems to be solved by the present disclosure are not limited to the problems mentioned above, and other problems that are not mentioned can be clearly understood by those skilled in the art from the description below.

According to the present disclosure, an apparatus of a vehicle, the apparatus may comprise a processor, and a memory storing at least one instruction that, when executed by the processor communicating with the memory, is configured to cause the apparatus to, release vehicle control associated with a first autonomous driving mode stored in the memory, based on the release of the vehicle control associated with the first autonomous driving mode, output, via a user interface of the vehicle, a prompt for a user input, based on the user input received via the user interface in response to the prompt, generate a signal indicating activation of vehicle control associated with a second autonomous driving mode stored in the memory, and control, based on the signal and the activation of vehicle control associated with the second autonomous driving mode, autonomous driving of the vehicle.

The apparatus, wherein the at least one instruction that, when executed by the processor communicating with the memory, is configured to cause the apparatus to activate at least one of control functions operating in the first autonomous driving mode among functions supported by the second autonomous driving mode, wherein the first autonomous driving mode is configured to be operated by a first autonomous driving system associated with a first autonomous driving level, and wherein the second autonomous driving mode is configured to be operated by a second autonomous driving system associated with a second autonomous driving level different from the first autonomous driving level.

The apparatus, wherein the at least one of control functions operating in the first autonomous driving mode may comprise at least one of longitudinal control of the vehicle or lateral control of the vehicle. The apparatus, wherein the first autonomous driving mode and the second autonomous driving mode are modes in which at least one function is supported differently from each other. The apparatus, wherein the at least one instruction that, when executed by the processor communicating with the memory, is configured to cause the apparatus to output, via the user interface, the prompt based on at least one of, a destination route of the vehicle being set, the vehicle driving on a road of a predefined type, or accumulated data about a driver of the vehicle satisfying a predetermined condition.

The apparatus, wherein the at least one instruction that, when executed by the processor communicating with the memory, is configured to cause the apparatus to, based on the user input, via the user interface, being received within a predetermined time duration from a point in time when the prompt is outputted via the user interface, activate the vehicle control associated with the second autonomous driving mode. The apparatus, wherein the user input may comprise at least one of, an input received via a physical button of the vehicle, an input received via a selection area displayed on a touchscreen display of the vehicle, a user voice input, or a user gesture input.

The apparatus, wherein the physical button or the selection area is configured to, independently activate the first autonomous driving mode and the second autonomous driving mode, respectively, or selectively activate either the first autonomous driving mode or the second autonomous driving mode. The apparatus, wherein the user input is received through an input interface provided on a steering wheel of the vehicle. The apparatus, wherein the user interface is configured to output a selectable option for activating a preset function, wherein the preset function is among functions supported by the second autonomous driving mode.

The apparatus, wherein the at least one instruction that, when executed by the processor communicating with the memory, is configured to cause the apparatus to, output, via the user interface, a graphical area for selecting a plurality of functions supported by the second autonomous driving mode, and based on reception of a selection input for a specific function, activate the specific function.

According to the present disclosure, a method performed by an apparatus of a vehicle, the method may comprise releasing vehicle control associated with a first autonomous driving mode, based on the releasing of the vehicle control associated with the first autonomous driving mode, outputting, via a user interface of the vehicle, a prompt for a user input, based on the user input received via the user interface in response to the prompt, generating a signal indicating activation of vehicle control associated a second autonomous driving mode, and controlling, based on the signal and the activation of vehicle control associated with the second autonomous driving mode, autonomous driving of the vehicle.

The method, wherein the generating of the signal indicating activation of the vehicle control associated with the second autonomous driving mode may comprise activating at least one of control functions operating in the first autonomous driving mode among functions supported by the second autonomous driving mode, wherein the first autonomous driving mode is configured to be operated by a first autonomous driving system associated with a first autonomous driving level, and wherein the second autonomous driving mode is configured to be operated by a second autonomous driving system associated with a second autonomous driving level different from the first autonomous driving level.

The method, wherein the at least one control functions operating in the first autonomous driving mode may comprise at least one of longitudinal control of the vehicle or lateral control of the vehicle. The method, wherein the first autonomous driving mode and the second autonomous driving mode are modes in which at least one function is supported differently from each other. The method, wherein the outputting of the prompt may comprise outputting, via the user interface, the prompt based on at least one of, a destination route of the vehicle being set, the vehicle driving on a road of a predefined type, and accumulated data about a driver of the vehicle satisfying a predetermined condition.

The method, wherein the generating of the signal indicating activation of the vehicle control associated the second autonomous driving mode may comprise, based on the user input, via the user interface, being received within a predetermined time duration from a point in time when the prompt is outputted via the user interface, activating the vehicle control associated the second autonomous driving mode.

According to the present disclosure, a vehicle may comprise a driving control circuit configured to control autonomous driving of the vehicle, a processor, and a memory storing at least one instruction that, when executed by the processor communicating with the memory, is configured to cause the vehicle to, detect deactivation of a first autonomous driving mode, wherein the vehicle is configured to perform, in the first autonomous driving mode, at least one of longitudinal control of autonomous driving or lateral control of autonomous driving, obtain, via a user interface of the vehicle and based on the detected deactivation, a user input for activating a second autonomous driving mode that is different from the first autonomous driving mode, based on a determination that the user input is received within a predetermined time from a time associated with the deactivation, output a signal indicating activation of the second autonomous driving mode, activate, based on the signal, the second autonomous driving mode that follows the first autonomous driving mode, wherein at least one control function previously performed by the first autonomous driving mode is resumed in the second autonomous driving mode, and control, based on the activated second autonomous driving mode, autonomous driving of the vehicle.

The vehicle, wherein the at least one instruction, when executed by the processor communicating with the memory, is configured to cause the vehicle to present, via the user interface, a prompt for the user input, based on at least one of, a destination route of the vehicle, the vehicle driving on a road of a predefined type, or accumulated data associated with a driver of the vehicle.

The vehicle, wherein the at least one instruction, when executed by the processor communicating with the memory, is configured to cause the vehicle to obtain the user input via at least one of a physical button of the vehicle, a selection area displayed on a display of the vehicle, a user voice input, or a user gesture input.

### BRIEF DESCRIPTION OF THE DRAWINGS

The above and other objects, features and advantages of the present disclosure will become more apparent to those of ordinary skill in the art by describing examples thereof in detail with reference to the accompanying drawings, in which:
FIG. 1 shows an example of a vehicle.
FIG. 2 shows an example of a control operation for function reuse after an autonomous driving system ends;
FIG. 3 shows an example of a specific control operation for the function reuse after an autonomous driving system ends;
FIG. 4 shows an example of a user interface;
FIG. 5 shows an example of a control operation for function reuse after an autonomous driving system ends; and
FIG. 6 shows an example of a control operation for function reuse after an autonomous driving system ends.
FIG. 7 shows an example computing system (e.g., a computing device of a vehicle or any other apparatus).

### DETAILED DESCRIPTION

Hereinafter, preferred examples of the present disclosure will be described in detail with reference to the accompanying drawings.

However, the technical idea of the present disclosure is not limited to few examples that will be described, but may be implemented in various different forms, and one or more of the components in the examples may be selectively combined or substituted and used within the scope of the technical idea of the present disclosure.

Further, terms (including technical and scientific terms) used in the examples of the present disclosure may be construed as having meanings that can be generally understood by those skilled in the art to which the present disclosure belongs, unless explicitly and specifically defined and described, and meanings of terms that are commonly used, such as terms defined in a dictionary, may be construed in consideration of contextual meaning of the related art.

In addition, the terms used in the examples of the present disclosure are intended to describe the examples and are not intended to limit the present disclosure.

For purposes of this application and the claims, using the exemplary phrase "at least one of: A; B; or C" or "at least one of A, B, or C," the phrase means "at least one A, or at least one B, or at least one C, or any combination of at least one A, at least one B, and at least one C. Further, exemplary phrases, such as "A, B, or C", "at least one of A, B, and C", "at least one of A, B, or C", etc. as used herein may mean each listed item or all possible combinations of the listed items. For example, "at least one of A or B" may refer to (1) at least one A; (2) at least one B; or (3) at least one A and at least one B.

In addition, terms such as "first," "second," "A," "B," "(a)," and "(b)" may be used to describe components in the examples of the present disclosure.

These terms are only intended to distinguish the components from other components, and do not limit the nature, order, or sequence of the components.

When a component is described as being "connected," "coupled," or "joined" to another component, this may include not only a case where the component is directly connected, coupled, or joined to the other component, but also a case where the component is "connected," "coupled," or "joined" to the other component by still another component between the component and the other component.

Further, when one component is described as being formed or disposed "on or under" another component, the term "on or under" includes not only a case in which the two components are in direct contact with each other, but also a case in which one or more other components are formed or disposed between the two components. In addition, when the term "on or under" is expressed, this may mean not only an upward direction but also a downward direction with respect to one component.

In various flowcharts of the present disclosure, at least some steps may be omitted or the order of the steps may be changed, and at least some of the various examples of the present disclosure may be performed at a specific point in time in each step of the flowchart. The various flowcharts of the present disclosure may be performed by at least one of a control device 100, a processor 130, and a vehicle 10. Further, redundant content in the drawings of the present disclosure may be omitted.

The term "module" or "unit" used in the specification means a software and/or hardware component, and the "module" or "unit" performs certain operations/functions/roles. However, the "module" or "unit" is not construed as being limited to software or hardware. The "module" or "unit" may be configured to be in an addressable storage medium or to execute one or more processors. Therefore, as an example, the "module" or "unit" may include at least one of components such as software components, object-oriented software components, class components, and task components, processes, functions, attributes, procedures, sub-routines, segments of program codes, drivers, firmware, micro-codes, circuits, data, databases, data structures, tables, arrays, or variables. Functions provided in the components, "modules", or "units" may be combined into a smaller number of components, "modules", or "units" or further divided into additional components, "modules", or "units".

In the present disclosure, the "module" or "unit" may be realized as a processor and a memory. The "processor" should be widely construed to include a general-purpose processor, a central processing unit (CPU), a microprocessor, a digital signal processor (DSP), a microcontroller, a state machine, or the like. In some environments, the "processor" may refer to an application-specific integrated circuit (ASIC), a programmable logic device (PLD), or a field-programmable gate array (FPGA), and the like. For example, the "processor" may refer to a combination of processing devices such as a combination of a DSP and a microprocessor, a combination of a plurality of microprocessors, a combination of one or more microprocessors combined with a DSP core, or any other such combination. Moreover, the "memory" should be widely construed to include any electronic component capable of storing electronic information. The "memory" may refer to various types of processor-readable medium such as a random access memory (RAM), a read only memory (ROM), a non-volatile random access memory (NVRAM), a programmable read only memory (PROM), an erasable programmable read only memory (EPROM), an electrically erasable programmable read only memory (EEPROM), a flash memory, a magnetic or optical data storage device, and registers. When the processor can read information from a memory and/or record the information in the memory, the memory may be in a state of electronic communication with a processor. Memory integrated into a processor is in a state of electronic communication with the processor.

The one or more features described herein may be provided as a computer program stored in a computer-readable recording medium in order to be executed on a computer. The medium may either continuously store a computer-executable program or temporarily store the program for execution or download. Furthermore, the medium may be a variety of recording or storage means in the form of a single hardware device or multiple combined hardware devices, and is not limited to media directly connected to some computer system but may also be distributed across a network. Examples of such media include magnetic media such as a hard disk, a floppy disk, or a magnetic tape, optical recording media such as a CD-ROM or a DVD, magneto-optical media such as a floptical disk, and a ROM, RAM, or flash memory, among others, configured to store program instructions. Additional examples of such media include media or storage media that are managed by an app store that distributes applications or by various other sites or servers that provide or distribute software.

In a hardware implementation, processing units used for performing the techniques may be implemented within one or more ASICs, DSPs, digital signal processing devices, programmable logic devices, field-programmable gate arrays, processors, controllers, microcontrollers, microprocessors, electronic devices, or computers or combinations thereof designed to perform the functions described in the present disclosure.

"Driver control assistance system" or "driver assistance system" mentioned in the present disclosure means hardware and software that can assist a driver in continuously controlling longitudinal and lateral movements of a vehicle. This driver control assistance system or driver assistance system may be referred to as any one of a "first autonomous driving system" or a "second autonomous driving system" in the present disclosure.

An automation level of an autonomous driving vehicle may be classified as follows, according to the American Society of Automotive Engineers (SAE). At autonomous driving level 0, the SAE classification standard may correspond to "no automation," in which an autonomous driving system is temporarily involved in emergency situations (e.g., automatic emergency braking) and/or provides warnings only (e.g., blind spot warning, lane departure warning, etc.), and a driver is expected to operate the vehicle. At autonomous driving level 1, the SAE classification standard may correspond to "driver assistance," in which the system performs some driving functions (e.g., steering, acceleration, brake, lane centering, adaptive cruise control, etc.) while the driver operates the vehicle in a normal operation section, and the driver is expected to determine an operation state and/or timing of the system, perform other driving functions, and cope with (e.g., resolve) emergency situations. At autonomous driving level 2, the SAE classification standard may correspond to "partial automation," in which the system performs steering, acceleration, and/or braking under the supervision of the driver, and the driver is expected to determine an operation state and/or timing of the system, perform other driving functions, and cope with (e.g., resolve) emergency situations. At autonomous driving level 3, the SAE classification standard may correspond to "conditional automation," in which the system drives the vehicle (e.g., performs driving functions such as steering, acceleration, and/or braking) under limited conditions but transfer driving control to the driver when the required conditions are not met, and the driver is expected to determine an operation state and/or timing of the system, and take over control in emergency situations but do not otherwise operate the vehicle (e.g., steer, accelerate, and/or brake). At autonomous driving level 4, the SAE classification standard may correspond to "high automation," in which the system performs all driving functions, and the driver is expected to take control of the vehicle only in emergency situations. At autonomous driving level 5, the SAE classification standard may correspond to "full automation," in which the system performs full driving functions without any aid from the driver including in emergency situations, and the driver is not expected to perform any driving functions other than determining the operating state of the system. Although the present disclosure may apply the SAE classification standard for autonomous driving classification, other classification methods and/or algorithms may be used in one or more configurations described herein.

One or more features associated with autonomous driving control may be activated based on configured autonomous driving control setting(s) (e.g., based on at least one of: an autonomous driving classification, a selection of an autonomous driving level for a vehicle, etc.). Based on one or more features (e.g., feature of seamless switching between autonomous driving mode based on user input and driving conditions) described herein, an operation of the vehicle may be controlled. The vehicle control may include various operational controls associated with the vehicle (e.g., autonomous driving control, sensor control, braking control, braking time control, acceleration control, acceleration change rate control, alarm timing control, forward collision warning time control, etc.).

One or more auxiliary devices (e.g., engine brake, exhaust brake, hydraulic retarder, electric retarder, regenerative brake, etc.) may also be controlled, for example, based on one or more features (e.g., feature of seamless switching between autonomous driving mode based on user input and driving conditions) described herein. One or more communication devices (e.g., a modem, a network adapter, a radio transceiver, an antenna, etc., that is capable of communicating via one or more wired or wireless communication protocols, such as Ethernet, Wi-Fi, near-field communication (NFC), Bluetooth, Long-Term Evolution (LTE), 5G New Radio (NR), vehicle-to-everything (V2X), etc.) may also be controlled, for example, based on one or more features (e.g., feature of seamless switching between autonomous driving mode based on user input and driving conditions) described herein.

Minimum risk maneuver (MRM) operation(s) may also be controlled, for example, based on one or more features (e.g., feature of seamless switching between autonomous driving mode based on user input and driving conditions) described herein. A minimal risk maneuvering operation (e.g., a minimal risk maneuver, a minimum risk maneuver) may be a maneuvering operation of a vehicle to minimize (e.g., reduce) a risk of collision with surrounding vehicles in order to reach a lowered (e.g., minimum) risk state. A minimal risk maneuver may be an operation that may be activated during autonomous driving of the vehicle when a driver is unable to respond to a request to intervene. During the minimal risk maneuver, one or more processors of the vehicle may control a driving operation of the vehicle for a set period of time.

Biased driving operation(s) may also be controlled, for example, based on one or more features (e.g., feature of seamless switching between autonomous driving mode based on user input and driving conditions) described herein. A driving control apparatus may perform a biased driving control. To perform a biased driving, the driving control apparatus may control the vehicle to drive in a lane by maintaining a lateral distance between the position of the center of the vehicle and the center of the lane. For example, the driving control apparatus may control the vehicle to stay in the lane but not in the center of the lane. The driving control apparatus may identify or determine a biased target lateral distance for biased driving control. For example, a biased target lateral distance may comprise an intentionally adjusted lateral distance that a vehicle may aim to maintain from a reference point, such as the center of a lane or another vehicle, during maneuvers such as lane changes. This adjustment may be made to improve the vehicle's stability, safety, and/or performance under varying driving conditions, etc. For example, during a lane change, the driving control system may bias the lateral distance to keep a safer gap from adjacent vehicles, considering factors such as the vehicle's speed, road conditions, and/or the presence of obstacles, etc.

One or more sensors (e.g., IMU sensors, camera, LIDAR, RADAR, blind spot monitoring sensor, line departure warning sensor, parking sensor, light sensor, rain sensor, traction control sensor, anti-lock braking system sensor, tire pressure monitoring sensor, seatbelt sensor, airbag sensor, fuel sensor, emission sensor, throttle position sensor, inverter, converter, motor controller, power distribution unit, high-voltage wiring and connectors, auxiliary power modules, charging interface, etc.) may also be controlled, for example, based on one or more features (e.g., feature of seamless switching between autonomous driving mode based on user input and driving conditions) described herein. An operation control for autonomous driving of the vehicle may include various driving control of the vehicle by the vehicle control device (e.g., acceleration, deceleration, steering control, gear shifting control, braking system control, traction control, stability control, cruise control, lane keeping assist control, collision avoidance system control, emergency brake assistance control, traffic sign recognition control, adaptive headlight control, etc.).

An autonomous driving level and/or autonomous driving activation/deactivation may also be controlled, for example, based on one or more features (e.g., feature of seamless switching between autonomous driving mode based on user input and driving conditions) described herein. A driving control apparatus may perform an autonomous driving level control (e.g., a change of an autonomous driving level, a change of a required user attentiveness, etc.) or cause deactivation of an autonomous driving operation. For example, by changing the required user attentiveness, the driver may be required to place his/her hands on the driving wheel more often (e.g., at least once in a threshold time period, such as five second, 30 seconds, 1 minute, etc.). By changing the required user attentiveness, the driver may be required to look ahead more often (e.g., at least once in a threshold time period, such as five second, 30 seconds, 1 minute, etc.). By changing the autonomous driving level, one or more video contents may not be displayed on a display of the vehicle.

The first autonomous driving system and the second autonomous driving system may each correspond to SAE(Society of Automotive Engineers) Level 2, 2.5, 3, or 4. For example, a system corresponding to SAE Level 2 may include functions such as lane keeping assist and cruise control with distance keeping, and may require continuous driver supervision.

A system corresponding to SAE Level 2.5 may be similar to SAE Level 2 but may additionally support limited lane change functions under certain conditions. A system corresponding to SAE Level 3 may perform conditional autonomous driving, in which the system performs all dynamic driving tasks under specific conditions without requiring driver intervention. A system corresponding to SAE Level 4 may provide full autonomous driving within a restricted operational domain (e.g., a geofenced area), where no driver intervention is needed at all under the defined conditions.

The first autonomous driving system and the second autonomous driving system may be systems of different autonomous driving levels, or they may be systems of the same autonomous driving level. Even when the systems correspond to the same level, the first autonomous driving system and the second autonomous driving system may support at least some functions in a functionally distinct manner.

For example, the first autonomous driving system may correspond to SAE Level 2.5 and support functions such as lane keeping assist, cruise control with distance keeping, and curved road following. It may also conditionally support lane changes when the driver activates the turn signal. However, the first autonomous driving system may not support highway merge/exit recognition or automatic lane changes in congested traffic conditions.

The second autonomous driving system may also correspond to SAE Level 2.5 but support different features compared to the first system. For instance, it may include traffic jam assist and automated highway merge/exit guidance, and may be capable of initiating or recommending lane changes based on surrounding vehicle dynamics without requiring explicit driver input. On the other hand, the second system may provide less precise lane keeping on curved roads compared to the first system. "Feature" mentioned in the present disclosure may mean functions of a specific system that assists a driver in a defined traffic scenario, situation, and system boundary.

"Dynamic control" mentioned in the present disclosure may mean performing operational and tactical functions required to move a vehicle, in real time. This may include control of lateral and longitudinal movements of the vehicle, monitoring of a road environment, coping with events in a road traffic environment, operation plans, signal transmission, and the like.

"System boundaries" mentioned in the present disclosure may mean verifiable or measurable limits or conditions set by a manufacturer, and conditions that affect a system designed to assist a driver, or functions of the system, and the ability of the system operating as intended, or settings within the range of the conditions.

Hereinafter, the examples will be described in detail with reference to the accompanying drawings, the same or corresponding components will be denoted by the same reference numbers throughout the drawings, and redundant description thereof will be omitted.

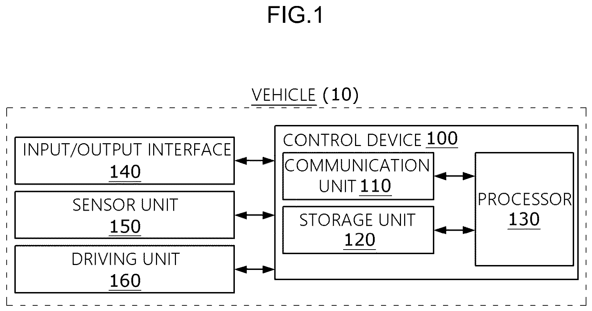

FIG. 1 shows an example of the vehicle 10 according to an example.

The vehicle 10 may include the control device 100, a communication unit 110, a storage unit 120, the processor 130, an input/output interface 140, a sensor unit 150, and a driving unit 160. Each of these components of FIG. 1 may be implemented inside the vehicle.

The vehicle 10 may be dynamically controlled in various driving situations through an autonomous driving system. For example, the autonomous driving system or driver assistance system may simultaneously provide driving safety and convenience through longitudinal control (acceleration and deceleration) and lateral control (lane keeping and lane change) of the vehicle 10. The autonomous driving system may monitor a driving environment through sensors and control devices, and process data in real time to adjust a position, driving speed, direction, and other operational parameters (e.g., steering angle, brake pressure, or throttle level, etc.) of the vehicle.

Hereinafter, the autonomous driving system and the driver assistance system will be collectively described as the autonomous driving system, and it should be noted that functions provided by the respective systems may be selectively activated depending on driving conditions (e.g., urban roads, highways, or construction zones, etc.).

The control device 100 may be formed integrally with internal components of the vehicle, may be implemented as an independent device separately from the other components inside the vehicle 10, and may perform communication with the internal components of the vehicle through various connection means (for example, a CAN bus, a wireless network, and a wired connection such as Ethernet or USB). The control device 100 may include the communication unit 110, the storage unit 120, and the processor 130 to manage longitudinal and lateral control of the vehicle, and may further include other components such as the input/output interface 140, the sensor unit 150, and the driving unit 160 to perform a complex control function depending on a driving situation (e.g., merging onto a highway, responding to a pedestrian, or navigating a roundabout, etc.).

According to an example, the control device 100 may store data collected by the sensor unit 150 during driving in the storage unit 120 and process the data in real time to control functions for safety and convenience of the vehicle. For example, the control device may perform overall control and management of the autonomous driving system and the driver assistance system, such as adjusting speed and lane keeping functions of the vehicle based on environmental data detected by the sensor unit, or providing notifications in situations in which driver intervention is required (e.g., sudden obstacle detection, route deviation, or system failure, etc.).

Further, the control device 100 may display a vehicle control status or receive a driver input to control the driving function through a user interface linked with a human-machine interface (HMI) based on various driver settings and driving conditions (e.g., driving mode preferences, weather settings, or comfort level, etc.).

The communication unit 110 may perform communication with other control devices inside the vehicle to share inter-system data or transmit or receive various types of information through a connection to the outside of the vehicle. The communication unit 110 may transmit control signals and data between the internal components using various in-vehicle communication schemes such as CAN communication and Ethernet, and may link driving information and external data in real time through communication with a user terminal, another vehicle (vehicle-to-vehicle (V2V)), infrastructure (vehicle-to-infrastructure (V2I)), or an external server (e.g., a cloud-based navigation or traffic monitoring server, etc.).

The communication unit 110 may perform short-range communication, GPS signal reception, vehicle-to-everything (V2X) communication, optical communication, broadcast transmission and reception, and intelligent transport systems (ITS) communication functions, and may support stable data transmission in a short range using wireless communication technology such as Bluetooth, radio frequency identification (RFID), Infrared Data Association (IrDA), ultra wideband (UWB), ZigBee, near field communication (NFC), Wi-Fi, Wi-Fi Direct, and wireless USB (e.g., for keyless entry, firmware updates, or infotainment control, etc.). Further, the communication unit 110 may include a mobile communication module based on a mobile communication network (e.g., LTE, 5G, or 6G, etc.) and a wireless Internet module for access to wireless Internet to receive real-time data through long-range communication and improve the performance of the autonomous driving system in conjunction with a cloud (e.g., for map updates, remote diagnostics, or over-the-air feature activation, etc.).

The storage unit 120 may include various types of memories capable of storing data, and may be integrated into the control device 100 or the processor 130 or configured in the form of a separate module. The storage unit 120 may include a nonvolatile memory (for example, a hard disk drive, a flash memory, an EEPROM, an SRAM, an FRAM, a PRAM, or an MRAM) and a volatile memory (for example, a DRAM, an SDRAM, or a DDR-SDRAM), which may be combined to implement memory systems with various capacities and performance levels (e.g., high-speed caching, power-loss recovery, or parallel data streaming, etc.).

According to an example, the storage unit 120 may store data related to a plurality of autonomous driving systems, and may include instructions and setting information for driving the first autonomous driving system and the second autonomous driving system. Further, the storage unit 120 may store data such as a driver preference setting, a driving record, and system diagnosis data to support vehicle control and system management functions (e.g., updating driving profiles, logging error reports, or storing route history, etc.).

The processor 130 may perform communication with the communication unit 110, the storage unit 120, the input/output interface 140, the sensor unit 150, the driving unit 160, and various internal components of the vehicle 10 through electrical or operational connections, and may control operations of each component and perform data processing. The processor 130 is a central processing unit for command execution and data calculation, and may collect, process, and analyze data in real time to perform vehicle control according to a current driving environment of the vehicle. This allows signals between internal systems of the vehicle 10 to be smoothly transmitted, and allows each component to be managed so that the component can exhibit optimal performance (e.g., coordinated braking and steering, smooth acceleration, or adaptive cruise control, etc.).

The processor 130 may be implemented in the form of hardware, software, or a combination thereof, and may perform vehicle control logic in the form of, for example, a microcontroller, an FPGA, or an ASIC. Further, the processor 130 may include a multi-processor configuration for controlling complex autonomous driving and a driver assistance system. Such a processor configuration can support comprehensive control and stable performance of the vehicle through the execution of autonomous driving and assistance systems, sensor data processing, communication data management, a driving-related determination function, and the like (e.g., triggering lane-change logic, detecting pedestrian proximity, or adjusting to traffic conditions, etc.).

The input/output interface 140 serves to receive input related to vehicle control from the user and transfer vehicle control statuses and system operation information to the user.

The input/output interface 140 may perform a function of receiving various inputs from the user and transferring the vehicle control status to the user. For example, the input/output interface 140 may include at least one of an input through a physical button provided inside the vehicle 10, an input through a selection area displayed on a display of the vehicle 10, a user voice input, and a user gesture input (e.g., hand wave, tap, or spoken command, etc.).

The input means may include physical buttons, a selection area (for example, a touch area) on a touch display, a voice recognition function, a gesture recognition function, and the like, and this allows the user to input commands, for example, to request activation of the autonomous driving system, switch between functions, or set driving assistance (e.g., adjusting following distance, enabling highway mode, or toggling driver alerts, etc.).

Further, the input means may receive a user input through an input device provided in a steering wheel of the vehicle 10. For example, the driver may input a command to activate or deactivate the autonomous driving system during driving through a button mounted on the steering wheel. Such a steering wheel-based input may support the user so that the user can quickly control the autonomous driving function by providing an intuitive interface (e.g., thumb-press, scroll wheel, or push- and-hold gesture, etc.).

The output means includes a display, an audio module (for example, a speaker), a haptic module, and the like, and may provide the user with a status of the autonomous driving system, a control switching request notification, activation status of functions, and the like in a visual, auditory, or tactile form (e.g., flashing icons, voice prompts, or steering wheel vibrations, etc.). For example, a guidance message for informing the user that a change from the first autonomous driving system to the second autonomous driving system is possible may be output on the display or voice guidance may be provided in order to receive a switching request, so that the driver can easily perform system switching.

Further, the status of the autonomous driving system may be intuitively confirmed through a head-up display (HUD), a cluster, an audio video navigation (AVN), and a display built into a rearview mirror or side mirror (e.g., LED indicators or text overlays, etc.). In addition, the status of the autonomous driving system may be confirmed through a display of a console installed in each row of the vehicle 10, an application of a user terminal, and the like (e.g., smartphone app, tablet interface, or smart key display, etc.).

The sensor unit 150 may include a plurality of sensors that detect various types of driving and environmental information in real time to support stable operation of an autonomous driving and driver assistance system. The sensor unit 150 may measure a distance to and speed of a nearby object through long-range detection sensors such as radio detection and ranging (RADAR) and light detection and ranging (LIDAR), and may detect objects near the vehicle 10 by including an ultrasonic sensor (e.g., for parking assist or blind spot detection, etc.).

Further, the sensor unit 150 may include a location sensor such as a GPS to collect location information of the vehicle 10, and include a light sensor to provide ambient illumination information so that the system can cope with a change in light (e.g., entering a tunnel, sunset, or glare conditions, etc.). Further, the sensor unit 150 may include an accelerator pedal and deceleration pedal sensor, a steering wheel detection sensor, a seating sensor, and the like to monitor a driving control status of the vehicle 10 and user operations e.g., sudden braking, hands-off-wheel detection, or seat occupancy sensing, etc.).

The sensor unit 150 may include a camera. The camera can be classified into an external camera and an internal camera. The external camera may recognize a road and a surrounding environment (e.g., lane markings, road signs, or adjacent vehicles, etc.), and the internal camera may detect a driver's condition (for example, eye tracking or drowsiness detection) or an interior situation to comprehensively ascertain situations inside and outside the vehicle (e.g., driver attention level, hand position, or passenger activity, etc.). The sensor unit 150 may include a heart rate sensor, a pressure sensor, an infrared sensor, and the like to collect a driver's biometric information or various types of environmental data (e.g., stress level, fatigue indicators, or cabin temperature, etc.).

The driving unit 160 may include various components that provide drive power required for driving of the vehicle 10 and control the operation of the vehicle according to a command output from the control device 100. The driving unit 160 may be configured of devices that generate and transfer power for the vehicle, such as an engine, a motor, a transmission, and a wheel drive system, and a controller that controls the devices, and acceleration, deceleration, and direction change of the vehicle 10 may be performed through such components (e.g., torque vectoring, gear shifting, or regenerative braking, etc.).

The driving unit 160 is controlled to be able to maintain driving safety by performing longitudinal control (acceleration and deceleration) and lateral control (lane maintenance and change) of the vehicle. For example, the driving unit 160 receives a command from the control device 100 and adjusts an output of the motor or a rotation speed and direction of wheels so that the vehicle can follow a driving route (e.g., highway cruising, city cornering, or emergency lane adjustment, etc.).

Further, the driving unit 160 may include a brake system to reduce a speed of the vehicle or stop the vehicle during driving. The driving unit 160 may control the vehicle 10 based on control through an electric motor in the case of an electric vehicle or based on an engine output in the case of an internal combustion engine vehicle (e.g., hybrid, plug-in hybrid, or fuel cell system, etc.).

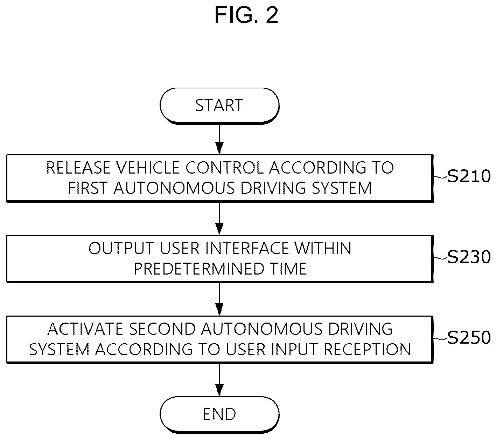

FIG. 2 shows an example of a control operation for function reuse after ending of the autonomous driving system according to an example.

The control device 100 may release the vehicle control according to the first autonomous driving system (S210).

Specifically, if the vehicle control according to the first autonomous driving system ends, the control device 100 may recognize this and release the control of the vehicle 10. For example, when a situation arises in which the driver requests manual control or continued use of functions of the first autonomous driving system is not appropriate due to a change in driving conditions occurs, the control device 100 may automatically deactivate the autonomous driving system (e.g., sharp curves, construction zones, or sensor blockage, etc.).

As the first autonomous driving system is deactivated by the control device 100, both the longitudinal control and the lateral control of the vehicle may be deactivated. In other words, the first autonomous driving system must be turned off first before the second autonomous driving system is activated later by a driver's input.

The first autonomous driving system is, for example, a system that can support longitudinal and lateral control of the vehicle by providing a basic driving assistance function, and may be designed so that the driver can immediately intervene when vehicle control is required (e.g., by steering override, braking, or manual acceleration, etc.).

For example, the first autonomous driving system may monitor a driver's manipulation and a driving environment in real time to support safe driving, and perform functions such as lane keeping, speed adjustment, and inter-vehicle distance maintenance in various situations such as urban driving (e.g., stop-and-go traffic, intersections, or multilane roads, etc.). The first autonomous driving system assists in constant control of the vehicle during driving, but is a system that requires continuous driver intervention, and may include basic control functions for improving driving convenience on highways and general roads (e.g., cruise assist, limited lane centering, or mild steering input, etc.).

The control device 100 may present a prompt via a user interface as the vehicle control according to the first autonomous driving system is deactivated (S230).

Specifically, the control device 100 may output, via the user interface, within a predetermined time (for example, three seconds) from a point in time if the first autonomous driving system is deactivated, to guide the driver so that the driver may easily recognize the control transition (e.g., from assisted to manual or between modes, etc.).

For example, the control device 100 may display a pop-up message on the display or provide a message via audio output for asking whether to activate the second autonomous driving system through voice guidance. Such a user interface is designed so that the driver can intuitively perform selection, making it possible for the driver to quickly activate a function of the second autonomous driving system through touch, button input, or voice command (e.g., "Activate highway assist," or tapping a dashboard icon, etc.).

The control device 100 may activate the second autonomous driving system according to the user input reception (S250).

Specifically, if the control device 100 receives a user input, the control device 100 may activate the second autonomous driving system according to the input to resume some dynamic control functions of the vehicle (e.g., steering assist, adaptive cruise, or lane centering, etc.).

For example, if the user requests activation of the second autonomous driving system by pressing a button on the display or through a voice command, the control device 100 may recognize the request and operate the second autonomous driving system to continue automated control without requiring multiple steps.

In this case, the control device 100 may continuously provide driving convenience by activating at least one of control functions (for example, longitudinal control and lateral control) previously performed by the first autonomous driving system among the functions provided by the second autonomous driving system (e.g., lane centering, distance keeping, or adaptive acceleration, etc.). For example, if the first autonomous driving system is deactivated while the lane keeping function is being performed, the control device 100 may resume the lane keeping function as it is or additionally activate the speed keeping function through the second autonomous driving system to continuously provide the previously used function without requiring additional configuration from the driver.

The second autonomous driving system may be, for example, a system that provides a driving assistance function optimized for highway driving. The second autonomous driving system may include functions such as lane change assistance, curve driving, and driving assistance at the time of merging onto and leaving a highway (e.g., automated merging, ramp guidance, or turn signal-triggered lane shifts, etc.), and may provide improved driving convenience to the driver by integrating various driving assistance functions such as maintaining an inter-vehicle distance, lane keeping, and lane change automation at the time of highway driving.

The control device 100 may provide feedback on the activated control function to the user visually or audibly. This allows the user such as the driver to clearly understand the currently activated function and a system status (e.g., via dashboard indicators, audible chimes, or HUD overlays, etc.).

In the present disclosure, the first autonomous driving system and the second autonomous driving system are not limited to specific systems, and may include various systems that provide different autonomous driving functions (e.g., urban assist, highway assist, or congestion-aware cruise control, etc.). These different autonomous driving systems support the driver so that the driver can reactivate and resume an existing driving assistance function through linkage of some functions during driving.

For example, after the first autonomous driving system ends, the driver may activate the second autonomous driving system through a simple input using the user interface, to quickly continue to use the previously used control function (e.g., by pressing a steering-wheel button, tapping the center console screen, or issuing a voice command, etc.). This allows the driver to easily resume assistance functions in various driving situations, and selectively activate and use a desired autonomous driving function when necessary.

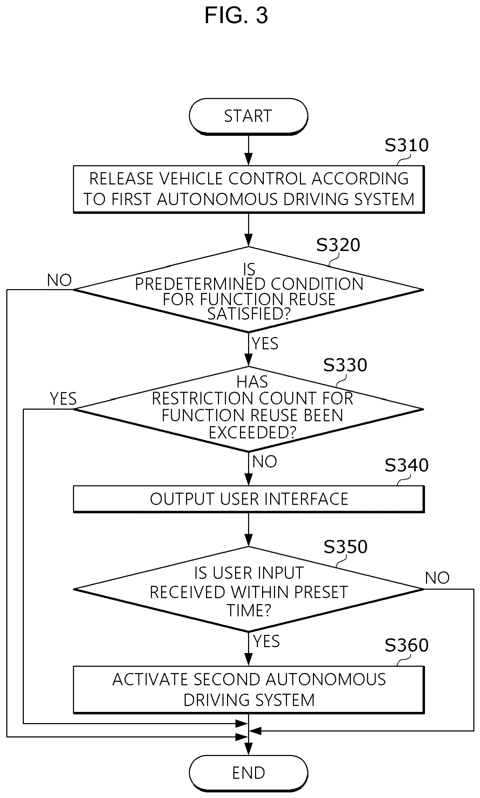

FIG. 3 shows an example of a specific control operation for function reuse after the autonomous driving system ends according to an example.

The control device 100 may release vehicle control according to the first autonomous driving system (S310), and determine whether a predetermined condition for function reuse is satisfied through the second autonomous driving system (S320).

According to an example, the predetermined condition may include whether a destination route of the vehicle 10 has been set. For example, when a specific route is designated by the driver setting a destination on a navigation device, the control device 100 may detect this designation and determine that a condition for activating the second autonomous driving system is satisfied. The condition for whether or not the route has been set may be a condition in which the intention to utilize the driving assistance function in a situation such as long-distance driving or entering a highway is assumed to be reflected (e.g., upcoming highway segment or rest area forecast, etc.).

According to an example, the predetermined condition may include a type of road on which the vehicle 10 is driving. For example, when the vehicle is driving on a road of a type suitable for utilizing the driving assistance system, such as a highway or a dedicated automobile road (e.g., expressways, toll roads, or car-only lanes, etc.), the control device 100 may detect this and determine that the condition for activating the second autonomous driving system is satisfied.

In particular, the highway is an environment in which autonomous driving functions such as lane keeping and automatic speed adjustment can operate effectively because there are no intersections or traffic lights, and the second autonomous driving system is activated on such a road type so that the driver can use the driving assistance function more conveniently and safely (e.g., maintaining consistent spacing and lane position over long distances, etc.).

The control device 100 may refer to map data of a GPS or navigation device or receive information from road infrastructure through V2X communication to ascertain whether the vehicle 10 is driving on the highway or the dedicated automobile road (e.g., toll road, express lane, or smart corridor, etc.). Further, road sign recognition technology using a camera may be utilized (e.g., detecting speed limit signs, highway entrance signs, or lane restrictions, etc.).

The predetermined condition may be determined based on not only the type of road but also a remaining distance on the road of that type. For example, the control device 100 may confirm whether a remaining driving distance is a predetermined distance (for example, 10 km) or more as one of conditions for reactivating the autonomous driving system on the highway or the dedicated automobile road (e.g., to ensure sufficient use duration of autonomous mode, etc.).

According to an example, the predetermined condition may be determined based on the driver's accumulated data. For example, the control device 100 may collect and analyze personalized data such as the driving assistance function frequently used by the driver, a highway driving frequency, driving habits, and driving preference, and predict whether there is a high need to reactivate the autonomous driving system in a specific situation (e.g., based on frequent use during morning commutes, frequent lane assist use, or historical manual overrides, etc.).

For example, when the driver tends to frequently activate the driving assistance function at the time of driving on a highway or prefers an autonomous driving assistance function at a certain speed or higher, the control device 100 may determine that the condition for activating the second autonomous driving system is satisfied in consideration of such accumulated data. This allows the autonomous driving function to be provided more efficiently according to a driver's driving style and preference (e.g., aggressive lane changers may trigger more proactive lane guidance, etc.).

If any one of the predetermined conditions is satisfied, the control device 100 may determine that the second autonomous driving system can be activated, and prepare for function reuse. In other words, if any one of whether or not a destination route of the vehicle is set, a type of road on which the vehicle is driving, and the driver's accumulated data satisfies the predetermined condition, the control device 100 may recognize the need to reactivate the second autonomous driving system and perform related control.

Next, the control device 100 may confirm whether a restriction count for function reuse has been exceeded (S330).

For example, if a specific control function is released by the currently activated first autonomous driving system, the control device 100 may activate the second autonomous driving system to resume the existing control function, but this function resumption operation may be limited to a set number of times. For example, the restriction count for function reuse may be set for a specific driving period (e.g., per trip, per day, or per battery cycle, etc.), but the restriction count is not limited thereto and may be flexibly adjusted according to a certain cycle or a user setting (e.g., monthly reset, usage tier, or subscription level, etc.).

If the restriction count for function reuse has been exceeded (S330: Yes), the control operation ends. On the other hand, if the restriction count for function reuse has not been exceeded (S330: No), the control device 100 may output, via a user interface (S340).

In this case, the user interface may be used to output within a predetermined time (for example, three seconds) from a point in time when the first autonomous driving system is deactivated, to guide the driver so that the driver can select additional function activation (e.g., lane centering, adaptive cruise, or blind spot monitoring, etc.).

The control device 100 may confirm whether a user input is received within a preset time from a point in time when the user interface is used to output (S350). For example, the control device 100 may confirm whether the driver requests the activation of the second autonomous driving system by touching a button on a screen or a voice command within a preset time (for example, five seconds) after the user interface is used to output a message (e.g., "Yes, continue assist" or tapping 'Resume' on the display, etc.).

If the user input to the user interface is received within the preset time (S350: Yes), the control device 100 may activate the second autonomous driving system (S360). In this case, at least one of the specific functions (for example, longitudinal control or lateral control) controlled by the first autonomous driving system may be operated again by the second autonomous driving system (e.g., maintaining speed, centering in-lane, or handling curves, etc.).

At least some of the specific functions controlled by the first autonomous driving system and the functions supported by the second autonomous driving system may be the same. For example, if the first autonomous driving system dynamically controlling the lateral control and the longitudinal control is deactivated, the longitudinal control may be reactivated by the second autonomous driving system (e.g., adaptive cruise control, smooth deceleration, or stop-and-go assist, etc.).

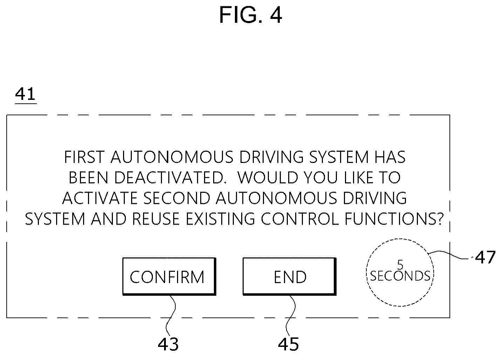

FIG. 4 shows an example of a user interface according to an example.

FIG. 4 illustrates an example of the user interface according to the example. The user interface in FIG. 4 is illustrated as a visual element displayed on a display screen 41, but the user interface is not limited thereto and may also be provided through auditory information such as voice guidance (e.g., spoken prompts or alert tones, etc.).

The screen 41 of FIG. 4 is a screen that is displayed within a predetermined time (for example, three seconds) after the first autonomous driving system is deactivated by a specific operation (for example, system control release due to user override such as braking, steering, or turning off the assist mode, etc.). This screen may be displayed through display screens according to various locations within the vehicle 10 (e.g., center console, cluster display, or head-up display, etc.).

On the screen 41, guidance information "The first autonomous driving system has been deactivated. Would you like to activate the second autonomous driving system and reuse existing control functions?" may be output in the form of text.

In this user interface, if a user input for selecting a confirmation area 43 is received, the control device 100 may activate the second autonomous driving system and resume at least some of the functions previously supported by the first autonomous driving system (e.g., resume lane keeping, speed regulation, or steering assist, etc.).

If a user input for selecting an end area 45 is received or no user input is received within a time limit (for example, five seconds) indicated in a count area 47, function resumption is not performed. In this case, the control device 100 may stop the activation of the second autonomous driving system and keep the system in a standby state until the driver activates the autonomous driving function again (e.g., via manual button press or menu selection, etc.).

Although not illustrated in FIG. 4, the user interface may include information for selecting an option for activating a preset specific function among the various functions provided by the second autonomous driving system. For example, functions frequently used by the driver during driving may be preferentially displayed on the screen 41 (e.g., lane centering, follow-distance adjustment, or curve assist, etc.). This allows the driver to quickly activate an autonomous driving assistance function appropriate for a current situation.

The user input to the user interface may be made through a physical button provided inside the vehicle or a soft button displayed on the display (e.g., capacitive steering-wheel buttons, touchscreen widgets, or dashboard toggles, etc.).

According to an example, a plurality of input means (for example, buttons or touch selection areas) for independently executing each of the first autonomous driving system, the second autonomous driving system, and the additional autonomous driving system may be provided, which allows the driver to quickly select and activate a specific autonomous driving system depending on route conditions or driving preferences.

Further, when a single input interface is provided, the input interface may be programmed to selectively activate the first autonomous driving system or the second autonomous driving system, to support the driver so that the driver can easily switch to a desired autonomous driving mode through an additional input or selection process on the user interface. For example, when the single input interface (e.g., a button or a selection area on the display, etc.) is pressed for a short time, the first autonomous driving system may be activated, and when the single input interface is pressed for a long time, the second autonomous driving system may be activated. Further, the driver may easily select an autonomous driving mode using the single input interface through various interaction schemes, such as pressing the button twice in succession or pressing the button for a long time and holding the button for a certain duration or longer (e.g., 2-second hold for highway mode or double-tap for city assist, etc.).

Further, although not illustrated in the user interface of FIG. 4, the control device 100 may be set to output an area for selecting a plurality of functions supported by the second autonomous driving system through the user interface, and to activate a specific function in response to reception of a selection input for the specific function (e.g., user taps "lane change assist" tile and system enables the corresponding logic, etc.).

For example, the user interface such as the screen 41 of FIG. 4 may provide an interface for selectively activating a plurality of functions (e.g., a lane keeping function, an inter-vehicle distance maintaining function, or an automatic speed adjustment function, etc.). When a user performs a selection input for a specific function, the control device 100 recognizes the input, activates the selected function, and performs necessary control during driving (e.g., automatic braking, steering correction, or speed hold, etc.). In this case, the function selection area may be implemented through a touch area of the display, and an alternative input scheme such as a voice input or a gesture input may be also supported (e.g., saying "enable cruise" or swiping on the display, etc.).

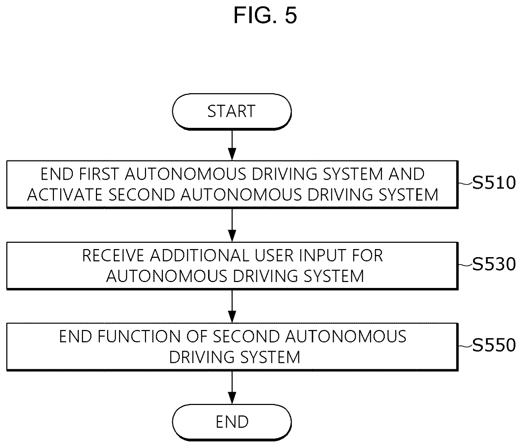

FIG. 5 shows an example of a control operation for function reuse after the autonomous driving system ends according to an example.

The control device 100 may end the first autonomous driving system, and activate the second autonomous driving system according to a user input (S510). In this operation, it may be assumed that the conditions such as the predetermined condition in FIG. 3 described above, the restriction count, and whether the user input is received within the preset time are all satisfied (e.g., the vehicle is on a highway, the function reuse limit has not been exceeded, and a driver confirmation is received within five seconds, etc.).

The control device 100 may receive an additional user input for the currently activated autonomous driving system (S530).

For example, the control device 100 may receive an additional user input for the currently activated second autonomous driving system and adjust a system operation according to a driver's intention (e.g., disabling speed control, changing lane mode, or deactivating assist, etc.).

The control device 100 may end a control function being operated by the second autonomous driving system according to the additional user input (S550).

Specifically, if the control device 100 receives an additional user input, the control device 100 may end a control function currently being performed by the second autonomous driving system according to the input (e.g., disabling lane keeping, turning off automatic speed adjustment, or deactivating inter-vehicle distance control, etc.).

For example, if the user inputs a command to stop the autonomous driving function, the control device 100 may recognize this input, deactivate the second autonomous driving system, and transfer a vehicle control back to the driver. This operation supports flexible adjustment of the function of the autonomous driving system according to a driving situation or a driver's intention (e.g., in heavy traffic, on local roads, or near intersections, etc.).

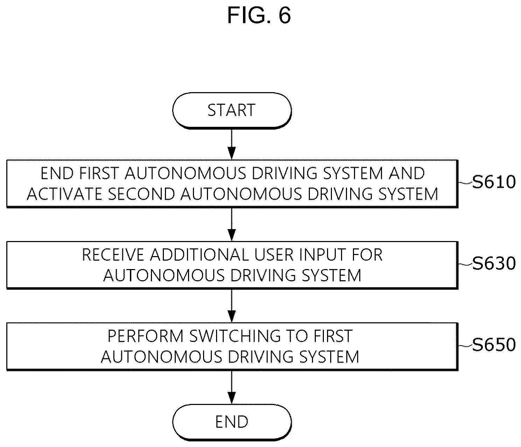

FIG. 6 shows an example of a control operation for function reuse after the autonomous driving system ends according to an example. Some steps of FIG. 6 are the same as those of FIG. 5, and FIG. 6 shows an example of an operation of switching back to the first autonomous driving system according to reception of an additional user input.

The control device 100 may end the first autonomous driving system and activate the second autonomous driving system (S610), and may receive an additional user input for the currently activated autonomous driving system (S630) (e.g., via a steering wheel button, touchscreen input, or voice command, etc.).

Next, the control device 100 may end the currently activated second autonomous driving system and switch back to the first autonomous driving system according to the additional user input (S650) (e.g., when the driver prefers to resume a simpler assistance mode or re-engage manual override functions, etc.).

According to an example, the second autonomous driving system can be activated only if the first autonomous driving system is deactivated, but switching to the first autonomous driving system can be performed at all times through a driver manipulation while the second autonomous driving system is in use (e.g., by pressing a steering button or touching an interface control, etc.).

Specifically, if the control device 100 receives an additional user input, the control device 100 may end the currently activated second autonomous driving system and switch to the first autonomous driving system according to the input (e.g., a button press, a touch selection, or a voice command, etc.).

For example, if a user inputs a command to stop the function of the second autonomous driving system and return to the first autonomous driving system, the control device 100 detects this input, promptly deactivates the second autonomous driving system, and then reactivates the first autonomous driving system (e.g., to resume basic assistance functions such as lane keeping or cruise control, etc.). Through such a switching operation, the driver may select a desired autonomous driving system according to various situations during driving, and flexibly switch the function as necessary (e.g., switching from highway assist to low-speed assist near city exits, etc.).

The autonomous driving system of the present disclosure described above provides a flexible control method that allows the driver to easily reuse and switch the autonomous driving functions as necessary during driving, so that the driver can effectively utilize the autonomous driving functions while quickly coping with various situations that may occur during driving (e.g., transitions between road types, traffic density changes, or driver preference shifts, etc.).

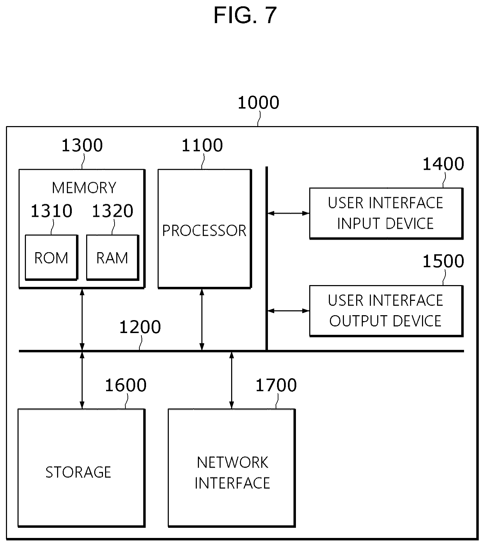

FIG. 7 shows an example computing system (e.g., a computing device of a vehicle or any other apparatus). One or more controllers, processors, etc. described herein, such as one or more components of the vehicle 10 or any other components and devices disclosed herein, may be implemented by or in the computing system as shown in FIG. 7.

A computing system 1000 may include at least one processor 1100, memory 1300, a user interface input device 1400, a user interface output device 1500, a storage 1600, and a network interface 1700, which are connected with each other via a bus 1200.

The processor 1100 may be a central processing unit (CPU) or a semiconductor device that processes instructions stored in the memory 1300 and/or the storage 1600. Each of the memory 1300 and the storage 1600 may include various types of volatile or nonvolatile storage media. For example, the memory 1300 may include a read-only memory (ROM) and a random-access memory (RAM).

Communication interface(s) (also referred to as communication device(s), communicator(s), communication module(s), communication unit(s), etc.), such as the network interface 1700, may allow software and/or data to be transferred between a device and one or more external devices, and/or between one or more components of a device. Communication interface(s) may include a receiver, a transmitter, a transceiver, a modem, a network interface and/or adapter (such as an Ethernet adapter), a radio transceiver, an antenna, a communication port, a Personal Computer Memory Card International Association (PCMCIA) slot and card, or the like. Software and data transferred via communication interface(s) may be in the form of signals, which may be electronic, electromagnetic, optical, infrared, or other signals capable of being received by communication interface(s). These signals may be provided to communication interface(s) via a communication path of a device, which may be implemented using, for example, wire or cable, fiber optics, a cellular link, a radio frequency (RF) link and/or other communications channels. Communication interface(s) may communicate using one or more communication protocols, such as Ethernet, Wi-Fi, near-field communication (NFC), Infrared Data Association (IrDA), Bluetooth, Bluetooth low energy (BLE), Zigbee, Long-Term Evolution (LTE), 5G New Radio (NR), vehicle-to-everything (V2X), a controller area network (CAN), or a local interconnect network (LIN), etc.

Accordingly, the operations of the method or algorithm described in connection with example example(s) disclosed in the specification may be directly implemented with a hardware module, a software module, or a combination of the hardware module and the software module, which is executed by the processor 1100. The software module may reside on a storage medium (e.g., the memory 1300 and/or the storage 1600) such as RAM, a flash memory, ROM, an erasable and programmable ROM (EPROM), an electrically EPROM (EEPROM), a register, a hard disk drive, a removable disc, or a compact disc-ROM (CD-ROM).

The storage medium may be coupled to the processor 1100. The processor 1100 may read out information from the storage medium and may write information in the storage medium. Alternatively, the storage medium may be integrated with the processor 1100. The processor and storage medium may be implemented with an application specific integrated circuit (ASIC). The ASIC may be provided in a user terminal. Alternatively, the processor and storage medium may be implemented with separate components in the user terminal.

According to an example of the present disclosure, there is a control device including: a memory configured to store a first autonomous driving system and a second autonomous driving system; and a processor configured to output, via a user interface, if vehicle control according to the first autonomous driving system is deactivated and to activate vehicle control according to the second autonomous driving system in response to reception of a user input to the output user interface.

In the control device according to some examples, the processor may be configured to activate at least one of control functions operating in the first autonomous driving system among functions supported by the second autonomous driving system.

In the control device according to some examples, the control functions operating in the first autonomous driving system may include at least one of longitudinal control and lateral control of the vehicle.

In the control device according to some examples, the first autonomous driving system and the second autonomous driving system may be systems in which at least some functions are supported differently from each other.

In the control device according to some examples, the processor may be configured to output, via the user interface, if at least one of whether or not a destination route of the vehicle is set, a type of road on which the vehicle is driving, and a driver's accumulated data satisfies a predetermined condition.

In the control device according to some examples, the processor may be configured to activate the vehicle control according to the second autonomous driving system if the user input to the user interface is received within a predetermined time from a point in time when the user interface is used to output.

In the control device according to some examples, the user input to the user interface may include at least one of an input through a physical button provided inside the vehicle; an input through a selection area displayed through a display of the vehicle; a user voice input; and a user gesture input.

In the control device according to some examples, the input through the physical button or the selection area may be configured as respective independent input means for executing the first autonomous driving system and the second autonomous driving system, or a single input interface for selectively executing the first autonomous driving system or the second autonomous driving system.

In the control device according to some examples, the user input to the user interface may be received through an input means provided on a steering wheel of the vehicle.

In the control device according to some examples, the user interface may be output so that a selection is made to activate a preset function among the functions supported by the second autonomous driving system.

In the control device according to some examples, the processor may be configured to deactivate the vehicle control according to the second autonomous driving system or perform switching to the vehicle control according to the first autonomous driving system in response to reception of an additional user input after the vehicle control according to the second autonomous driving system is activated.

In the control device according to some examples, the processor may be configured to output an area for selecting a plurality of functions supported by the second autonomous driving system through the user interface, and to activate a specific function in response to reception of a selection input for the specific function.

According to an example of the present disclosure, there is a method for controlling a vehicle, including: releasing vehicle control according to a first autonomous driving system; outputting a user interface according to the release of the vehicle control; and activating vehicle control according to a second autonomous driving system in response to reception of a user input to the output user interface.

In the method according to some examples, the activating of the vehicle control according to the second autonomous driving system may include activating at least one of control functions operating in the first autonomous driving system among functions supported by the second autonomous driving system.

In the method according to some examples, the control functions operating in the first autonomous driving system may include at least one of longitudinal control and lateral control of the vehicle.

In the method according to some examples, the first autonomous driving system and the second autonomous driving system may be systems in which at least some functions are supported differently from each other.

In the method according to some examples, the outputting of the user interface may include outputting, via the user interface, if at least one of whether or not a destination route of the vehicle is set, a type of road on which the vehicle is driving, and a driver's accumulated data satisfies a predetermined condition.

In the method according to some examples, the activating of the vehicle control according to the second autonomous driving system may include activating the vehicle control according to the second autonomous driving system if the user input to the user interface is received within a predetermined time from a point in time when the user interface is used to output.

In the method according to some examples, the user input to the user interface may include at least one of an input through a physical button provided inside the vehicle; an input through a selection area displayed through a display of the vehicle; a user voice input; and a user gesture input.

In the method according to some examples, the input through the physical button or the selection area may be configured as a plurality of independent input means for executing the first autonomous driving system and the second autonomous driving system, or a single input interface for selectively executing the first autonomous driving system or the second autonomous driving system.

In the method according to some examples, the user input to the user interface may be received through an input means provided on a steering wheel of the vehicle.

In the method according to some example, the user interface may be output so that a specific function among the functions supported by the second autonomous driving system can be selected.

The method according to some examples may further include receiving an additional user input after the vehicle control according to the second autonomous driving system is activated; and deactivating the vehicle control according to the second autonomous driving system or performing switching to the vehicle control according to the first autonomous driving system according to the additional user input. According to an example of the present disclosure, it is possible to improve driver convenience and efficiently utilize a driving assistance function by quickly activating the second autonomous driving system according to specific driving conditions after the first autonomous driving system is deactivated.

Further, since the driver can quickly reuse a necessary driving assistance function without complex manipulation, it is possible to minimize inconvenience during driving and improve safety.

The effects of the present disclosure are not limited to the effects mentioned above, and other effects that have not been mentioned can be clearly understood by those skilled in the art from the description below.

Although the present disclosure has been described above with reference to preferred examples of the present disclosure, it will be understood by those skilled in the art that various modifications and changes can be made to the present disclosure without departing from the spirit and scope of the present disclosure set forth in the following claims.

## Claims

1. An apparatus of a vehicle, the apparatus comprising:
a processor; and
a memory storing at least one instruction that, when executed by the processor communicating with the memory, is configured to cause the apparatus to:
release vehicle control associated with a first autonomous driving mode stored in the memory,
based on the release of the vehicle control associated with the first autonomous driving mode, output, via a user interface of the vehicle, a prompt for a user input,
based on the user input received via the user interface in response to the prompt, generate a signal indicating activation of vehicle control associated with a second autonomous driving mode stored in the memory, and
control, based on the signal and the activation of vehicle control associated with the second autonomous driving mode, autonomous driving of the vehicle.

2. The apparatus of claim 1, wherein the at least one instruction that, when executed by the processor communicating with the memory, is configured to cause the apparatus to activate at least one of control functions operating in the first autonomous driving mode among functions supported by the second autonomous driving mode,
wherein the first autonomous driving mode is configured to be operated by a first autonomous driving system associated with a first autonomous driving level, and
wherein the second autonomous driving mode is configured to be operated by a second autonomous driving system associated with a second autonomous driving level different from the first autonomous driving level,
wherein, optionally, the at least one of control functions operating in the first autonomous driving mode comprises at least one of longitudinal control of the vehicle or lateral control of the vehicle.

3. The apparatus of claim 1 or 2, wherein the first autonomous driving mode and the second autonomous driving mode are modes in which at least one function is supported differently from each other.

4. The apparatus of anyone of claims 1-3, wherein the at least one instruction that, when executed by the processor communicating with the memory, is configured to cause the apparatus to output, via the user interface, the prompt based on at least one of:
a destination route of the vehicle being set,
the vehicle driving on a road of a predefined type, or
accumulated data about a driver of the vehicle satisfying a predetermined condition.

5. The apparatus of anyone of claims 1-4, wherein the at least one instruction that, when executed by the processor communicating with the memory, is configured to cause the apparatus to, based on the user input, via the user interface, being received within a predetermined time duration from a point in time when the prompt is outputted via the user interface, activate the vehicle control associated with the second autonomous driving mode.

6. The apparatus of anyone of claims 1-5, wherein the user input comprises at least one of:
an input received via a physical button of the vehicle;
an input received via a selection area displayed on a touchscreen display of the vehicle;
a user voice input; or
a user gesture input,
wherein, optionally, the physical button or the selection area is configured to:
independently activate the first autonomous driving mode and the second autonomous driving mode, respectively, or
selectively activate either the first autonomous driving mode or the second autonomous driving mode,
wherein, further optionally, the user input is received through an input interface provided on a steering wheel of the vehicle.

7. The apparatus of anyone of claims 1-6, wherein the user interface is configured to output a selectable option for activating a preset function, wherein the preset function is among functions supported by the second autonomous driving mode.

8. The apparatus of anyone of claims 1-7, wherein the at least one instruction that, when executed by the processor communicating with the memory, is configured to cause the apparatus to:
output, via the user interface, a graphical area for selecting a plurality of functions supported by the second autonomous driving mode, and
based on reception of a selection input for a specific function, activate the specific function.

9. A method performed by an apparatus of a vehicle, the method comprising:
releasing vehicle control associated with a first autonomous driving mode;
based on the releasing of the vehicle control associated with the first autonomous driving mode, outputting, via a user interface of the vehicle, a prompt for a user input;
based on the user input received via the user interface in response to the prompt, generating a signal indicating activation of vehicle control associated a second autonomous driving mode; and
controlling, based on the signal and the activation of vehicle control associated with the second autonomous driving mode, autonomous driving of the vehicle.

10. The method of claim 9, wherein the generating of the signal indicating activation of the vehicle control associated with the second autonomous driving mode comprises activating at least one of control functions operating in the first autonomous driving mode among functions supported by the second autonomous driving mode,
wherein the first autonomous driving mode is configured to be operated by a first autonomous driving system associated with a first autonomous driving level, and
wherein the second autonomous driving mode is configured to be operated by a second autonomous driving system associated with a second autonomous driving level different from the first autonomous driving level,
wherein, optionally, the at least one control functions operating in the first autonomous driving mode comprises at least one of longitudinal control of the vehicle or lateral control of the vehicle.

11. The method of claim 9 or 10, wherein the first autonomous driving mode and the second autonomous driving mode are modes in which at least one function is supported differently from each other.

12. The method of anyone of claims 9-11, wherein the outputting of the prompt comprises outputting, via the user interface, the prompt based on at least one of:
a destination route of the vehicle being set,
the vehicle driving on a road of a predefined type, and
accumulated data about a driver of the vehicle satisfying a predetermined condition.

13. The method of anyone of claims 9-12, wherein the generating of the signal indicating activation of the vehicle control associated the second autonomous driving mode comprises, based on the user input, via the user interface, being received within a predetermined time duration from a point in time when the prompt is outputted via the user interface, activating the vehicle control associated the second autonomous driving mode.

14. A vehicle comprising:
a driving control circuit configured to control autonomous driving of the vehicle;
a processor; and
a memory storing at least one instruction that, when executed by the processor communicating with the memory, is configured to cause the vehicle to:
detect deactivation of a first autonomous driving mode, wherein the vehicle is configured to perform, in the first autonomous driving mode, at least one of longitudinal control of autonomous driving or lateral control of autonomous driving,
obtain, via a user interface of the vehicle and based on the detected deactivation, a user input for activating a second autonomous driving mode that is different from the first autonomous driving mode,
based on a determination that the user input is received within a predetermined time from a time associated with the deactivation, output a signal indicating activation of the second autonomous driving mode,
activate, based on the signal, the second autonomous driving mode that follows the first autonomous driving mode, wherein at least one control function previously performed by the first autonomous driving mode is resumed in the second autonomous driving mode; and
control, based on the activated second autonomous driving mode, autonomous driving of the vehicle,
wherein, optionally, the at least one instruction, when executed by the processor communicating with the memory, is configured to cause the vehicle to obtain the user input via at least one of a physical button of the vehicle, a selection area displayed on a display of the vehicle, a user voice input, or a user gesture input.

15. The vehicle of claim 14, wherein the at least one instruction, when executed by the processor communicating with the memory, is configured to cause the vehicle to present, via the user interface, a prompt for the user input, based on at least one of:
a destination route of the vehicle,
the vehicle driving on a road of a predefined type, or
accumulated data associated with a driver of the vehicle.
